# EUROPEAN PATENT SPECIFICATION

(11) **EP 4 740 420 B1**
(45) Date of publication and mention of the grant of the patent: **23.09.2026**
(21) Application number: 23739165.1
(22) Date of filing: 03.07.2023
(51) Int. Cl.: H04L 65/1069, H04L 65/1094, H04L 67/10, H04L 67/59, H04L 65/1059

(54) **A METHOD AND DEVICES FOR EXTENDING CAPABILITY AVAILABILITY OF AN INPUT/OUTPUT DEVICE**
VERFAHREN UND VORRICHTUNGEN ZUR ERWEITERUNG DER KAPAZITÄTSVERFÜGBARKEIT EINER EINGABE-/AUSGABEVORRICHTUNG
PROCÉDÉ ET DISPOSITIFS POUR ÉTENDRE LA DISPONIBILITÉ DE CAPACITÉ D'UN DISPOSITIF D'ENTRÉE/SORTIE

(43) Date of publication of application: 13.05.2026
(73) Proprietor: Telefonaktiebolaget LM Ericsson (publ), 164 83 Stockholm (SE)
(72) Inventor: LINDSKOG, Niklas, 224 72 LUND (SE); SALMELA, Patrik, 02230 ESPOO (FI); ARNGREN, Tommy, 954 42 SÖDRA SUNDERBYN (SE); ÖKVIST, Peter, 973 41 LULEÅ (SE)
(74) Representative: Ericsson
(86) International application number: PCT/EP2023/068168
(87) International publication number: WO 2025/008041

(56) References cited:
- WO-A1-2013/124814
- US-A1- 2021 344 520
- US-A1- 2023 106 594

## Description

### TECHNICAL FIELD

Disclosed are embodiments related to methods and devices for allowing a device not configured to operate as an Input/Output Device (IOD) to provide such functionality.

### BACKGROUND

Many users of today interact with 5-10 connected devices, ranging from very capable to single purpose devices, every day. One approach to meet an ever raising demand for connected devices to meet a broader spectrum of different tasks is to develop more advanced and diverse devices, comprising a broader range of various capabilities. A disadvantage with such an approach is that these devices become more expensive.

There are different solutions available in the market that enable wireless access, sharing and use of hardware resources available in a certain context, room or network, etc., like Apple-TV, Sun stateless terminals or video conferencing systems. However, all these solutions have in common that the users, in some way, are logged onto a corresponding communication system and what devices the communication system at hand holds are defined by the system itself.

A flexible concept, referred to as the cloudphone concept, disclosed in US11212130 B2, describes a solution where an identified user is provided access to communication resources and a service available in her surroundings via devices specifically adapted therefore, referred to as I/O user devices. The concept and the existing proof-of-concept solution thereby enables person-to-person or person-to-device communication, utilizing various communication resources, as long as these resources are located in proximity of the user associated to a service, such as e.g. a personal cloud based service. In one aspect of this disaggregated solution, communication resources in user-proximity may be associated, and allocated to a user based on requirements related to a specific communication service, requested by the user. Depending on the requirements of the user, the available resources and their different input and output capabilities, matching resources can then be combined and allocated in order to, in the best possible way, match the request of the user. US2021/344520 A1 discloses a user terminal emulation server handling registrations of Input/Output devices and keeping track of capabilities.

However, communication resources need to be preconfigured in order for them to be connectable and usable in the mentioned cloudphone concept. It is therefore a desire to make it easier to make use of communication resources and their capabilities in systems, such as the mentioned cloudphone system.

### SUMMARY

In order to further improve the solution mentioned above, a mechanism for enabling a LIOD to provide IOD capabilities to a communication system is suggested.

According to one aspect, a method at an Input/Output Device, IOD, for forwarding a session between a server and a legacy IOD, LIOD, is suggested where the method comprise transmitting of a notification to an Input/Output Handler, IODH, announcing at least one capability, available at a LIOD, upon having established a connection between the IOD and the LIOD; transmitting information on a beacon signal received by the IOD from a user tag, UT, to the IODH, wherein the beacon signal is associated with a session, to which the UT require access, and forwarding at least one stream, associated with the session and the at least one capability, available at the LIOD, to and/or from the LIOD, in response to having received an indication from the IODH that the at least one capability of the LIOD is to be added to the session.

According to another aspect, a method at an Input/Output device handler, IODH, for providing a session, provided from a server, access to at least one capability, available at a Legacy Input/Output Device, LIOD, is suggested, where the method comprise: receiving an announcement from an IOD, indicating at least one capability, available at a LIOD, which is connected to the IOD; receiving information on a beacon signal, received by the IOD, from the IOD, when the beacon signal has been transmitted from a user tag, UT, wherein the beacon signal is associated with a session, requested by the UT, and transmitting instructions to an IOD, instructing the IOD to add at least one of the at least one capability to the session, in response to having determined that at least one of the at least one capability is to be added to the session, based on the at least one capability available at the LIOD.

According to yet another aspect an IOD for forwarding a session between a server and LIOD is suggested, wherein the IOD is configured to: transmit a notification to an IODH, announcing at least one capability, available at a LIOD, upon having established a connection between the IOD and the LIOD; transmit information on a beacon signal received by the IOD from a user tag, UT TO, to the IODH, wherein the beacon signal is associated with a session, to which the UT require access, and forward at least one stream, associated with the session and the at least one capability, available at the LIOD, to and/or from the LIOD, in response to having received an indication from the IODH, indicating that the at least one capability of the LIOD is to be added to the session.

According to another aspect, an IODH, for providing a session, provided from a server, access to at least one capability, available at a LIOD is suggested, where the IODH is configured to: receive an announcement from an IOD, indicating at least one capability, available at a LIOD, connected to the IOD; receive information on a beacon signal, received by the IOD, from a user tag, UT, from the IOD, wherein the beacon signal is associated with a session, requested by the UT, and transmit instructions to the IOD, instructing the IOD to add at least one of the at least one capability to the session, in response to having determined, based on the at least one capability, available at the LIOD, that at least one of the at least one capability is to be added to the session.

### BRIEF DESCRIPTION OF THE DRAWINGS

The accompanying drawings, which are incorporated herein and form part of the specification, illustrate various embodiments.
Fig. 1 is an overview of a system enabling access to a service of a server, by requesting access from an UT, and by using capabilities of one or more IODs and one or more LIODs.
FIG. 2 is an exemplifying signaling scheme, illustrating how a session can be set up in a system, configured as suggested herein.
Fig. 3 is another signalling scheme, illustrating how a session can be set up in a system, configured to also handle LIODs, according to one embodiment.
Fig. 4a is a signalling scheme, illustrating how a disconnected LIOD can be handled by an IOD and IODH, according to one embodiment.
Fig. 4b is another signalling scheme, illustrating how an IOD replacement procedure can be executed, according to one embodiment.
Fig. 4c is yet another signalling scheme, illustrating how a disconnected IOD can be handled by an IOD, LIOD and an IODH, according to one embodiment.
Fig. 5 is a flow chart, illustrating a method for assisting a LIOD, executable in an IOD.
Fig. 6a is a flow chart, illustrating a method for handling a disconnected LIOD, executable in an IOD, according to one embodiment.
Fig. 6b is another flowchart, illustrating a method for handling a disconnection of a LIOD, executable at an IOD, according to one embodiment.
Fig. 6c is yet another flowchart, illustrating a method for handling a disconnection of an IOD, executable at the IOD, according to one embodiment.
Fig. 7 is a flowchart, illustrating a method for managing a LIOD according to one embodiment.
Fig. 8 is a flow chart, illustrating a method, executed at an IODH, according to one embodiment.
Fig. 9 is a block scheme, illustrating an IOD according to one embodiment.
Fig. 10 is another block scheme, illustrating an IOD according to another embodiment.
Fig. 11 is a block scheme, illustrating an IODH according to one embodiment.
Fig. 12 is another block scheme, illustrating an IODH, according to another embodiment

### DETAILED DESCRIPTION

Some of the embodiments contemplated herein will now be described more fully with reference to the accompanying drawings. Embodiments are provided by way of example to convey the scope of the subject matter to those skilled in the art and should therefore not be considered as limiting.

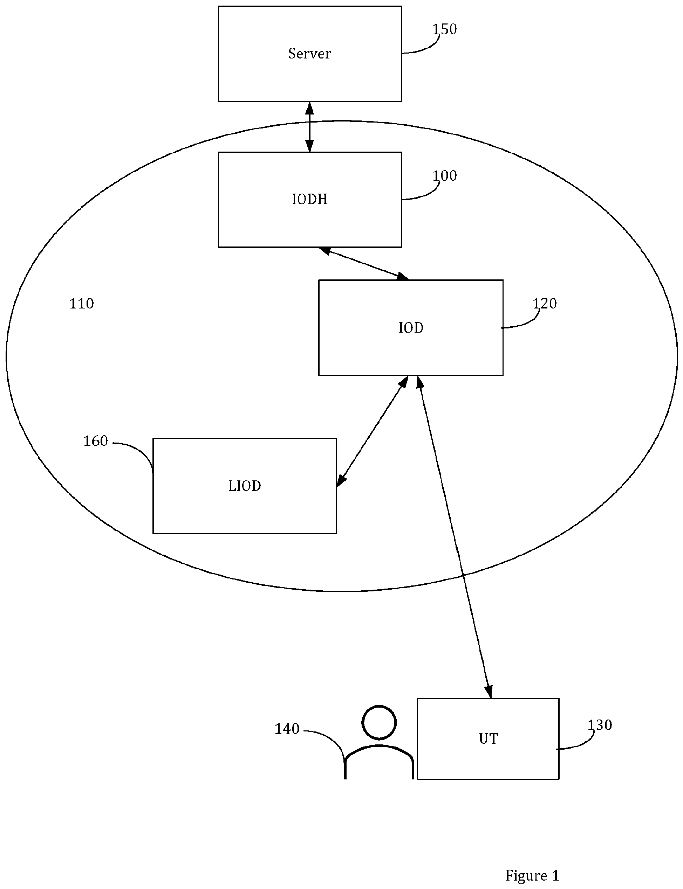

An overview of a concept, such as the one mentioned above is disclosed in Fig. 1. A system of input/output handlers, IODHs, here represented by IODH 100, configured to manage devices, compatible with what can be referred to as a cloudphone concept, are provided wherever coverage of the suggested concept is required. Consequently, IODHs may be distributed, and allocated to specific rooms, and corridors of a building. In an enterprise each room and corridor, or only some rooms, such as e.g. conference rooms may e.g. have one IODH each, where each IODH is responsible for handling one or more input/output devices, IODs of a specific geographical area, here referred to as an IOD domain 110, where each IOD comprise at least one functional capability, which a user may make use of, after having established connection with the IOD. In figure 1, IOD domain 110 comprise one IOD 120, which when receiving and recognizing a beacon signal, transmitted from a user tag (UT), here represented by UT 130, worn or carried by a user 140, that is requesting to connect to a specific server 150, which may alternatively be referred to as a terminal emulation application server, but from herein after referred to as a server. The server 150 and other system components may correspond to one or more networked physical computers or may correspond to application server operational functionality collectively provided by any number of networked physical computers (e.g., in a cloud computing environment) which operate in accordance with one or more embodiments disclosed herein. In some embodiments, the server and other system components can be referred to as a cloud phone, because of the possible virtualization of mobile phone functionality into a cloud computing environment.

More specifically, when a user 140 is activating the UT 130, which may be anything from a low-complexity toggle, capable of actuating with one button or touchpad, to a mobile phone or computer, providing a lot of functionalities and features, including the mentioned UT capability, while at the same time being located sufficiently close to an IOD, here represented by IOD 120, the IOD 120, the IOD 120 will be able to identify a beacon signal transmitted by the UT 130, using any available short range communication protocol, such bas e.g. Bluetooth Zigbee, Infrared (IR) , Ultrawideband (UWB), Near Field Communication (NFC) or IEEE 802.15, and after it has established connection with IODH 100 and server 150, from which the required and requested service is provided.

More specifically, one or more IODs, having identified the beacon signal, here represented by IOD 120 ,will forward certain information on the UT 130, provided in the beacon signal, to the IODH 100, which upon having authenticated, or participated in an authentication of the UT 130, towards the server 150, determines if the IOD 120 or, possibly even only one or more capabilities of IOD 120 is/are to be used in a session between the one or more allocated capabilities and the server 150. Capabilities are here to be referred to any type of capability which may be useable by a user 140, when accessing a service, and may include one or more of e.g. a display, providing viewing capability, a keypad, mouse, or touchscreen, providing input capability, a microphone, providing speaking capability, headphones or speakers, providing sound capability. Depending on which service that has been requested by the user 140, different types of capabilities may also be required and made available to the user 140, if admitted under the circumstances.

The IODH 100 may be able to determine if IOD 120, or one or more capabilities of IOD 120 is to be accepted for the session, requested from the UT 130, based on information, forwarded in the beacon signal, which may e.g. comprise specific requests for one or more specific capabilities. Also information available at the IODH 100, such as e.g. information on capabilities, available within IOD domain 110, rules, specifying e.g. which UTs that are allowed to access which servers, and/or specific rules for under which conditions and or preferences certain UTs are to be used, may be considered.

Rules may also specify access dependent on certain criteria, such as e.g. geographical location of the UT 130 or time of the day. Although IODH 100 is only connected to one server in Fig. 1, it is to be understood that each IODH of a system may be connected to one or more servers, where different servers may e.g. handle services. It is also to be understood that in case a plurality of IODs are located within one IOD domain, a plurality of IODs may receive the same beacon signal, where all those IODs are forwarding relevant information of the received beacon signal to the responsible IODH 100, where an evaluation of the most suitable capability or capabilities to be allocated to a specific session will be determined.

However, although the concept disclosed above is very flexible with respect to accessibility to various capabilities, where such accessibility may vary depending on capability requirements as well as many other conditions, the flexibility may be severely limited if capabilities available within an IOD domain are not capable of interacting with the described system. More specifically, if capabilities of devices, such as e.g. displays and touchpads, are within reach of the user 140, but are not configured to e.g. recognize a beacon signal transmitted from an UT 130, such capabilities will not be operable in the described system.

Fig. 1 therefore also comprise a device which is referred to as a legacy IOD (LIOD) 160, which is a device comprising one or more capabilities, but which is not at all aware of the network set-up as described herein, i.e. it is not capable of recognizing a beacon signal, even if it is located within range of the UT 130, nor does it have a configuration supporting it to connect to the IODH 100 or server 150, at least not without assistance from another device. In order to solve this problem, the IOD 120 is adapted, not only to act as an IOD, as described herein, but also to assist a LIOD 160, so that, with such assistance, the LIOD 160 will be able to act as an IOD. Thereby, the only requirement from a LIOD is that it is capable of, one way or the other, to connect to an IOD, using any type of wireless or wired communication protocol, mutually accepted by both entities.

An IOD 120, which is capable of assisting a LIOD 160 as described herein, may be referred to as a proxy, proxy IOD or anchor IOD. Such a proxy IOD may, as already mentioned above, perform the suggested proxy functionality parallel to acting as a conventional IOD. Additionally, or alternately, the proxy IOD may operate solely as a proxy, i.e. without having any capabilities of it own to offer to any user. However, for simplicity reasons, an IOD is hereinafter to be referred to as a device which is at least capable of assisting a LIOD 160 as described herein. As will be described below, a LIOD 160 may also, in addition to being able to provide one or more capabilities to a user 140, be a combined UT/LIOD, having all or at least the most essential functionalities of a conventional UT. The latter scenario may e.g. be applied by having a mobile phone acting as a combined UT and LIOD, thereby being a device which, on its own is capable of advertising a desire to access a specific service or session, by activating an actuator of the user interface (UI) of the mobile phone, by initiating a transmission of a beacon signal, and, once the beacon signal has been received and recognized by an IOD 120, the mobile phone will be able to make one or more of its capabilities available to the user, with assistance from the IOD 120, thereby increasing the flexibility of the described system dramatically.

An advantage of being able to use also non-capable IODs, such as LIODs, when accessing a server 150, by applying the described concept, is that practically all devices comprising at least one UI capability and which can be connected to an IOD, either via a wire, or a physical interface, such as e.g. via a USB interface, or via a short range protocol, such as e.g. Bluetooth, Wi-Fi, Ultra Wideband (UWB) or Zigbee, can be connected to server 150 via an such an IOD. Since the LIOD is connected to the system via a capable IOD, capabilities of a LIOD, can, from the perspective of the IODH 100 and the server 150 be seen as an extension of the capabilities of the IOD 120. Consequently, an IOD 120, comprising at least one capability of its own, which is used for such a purpose may provide all capabilities available from both devices 120, 160 to user 130, or available capabilities may be combined according to rules available in IODH 100, thereby allowing for a flexible usage of capabilities throughout an IOD domain 110

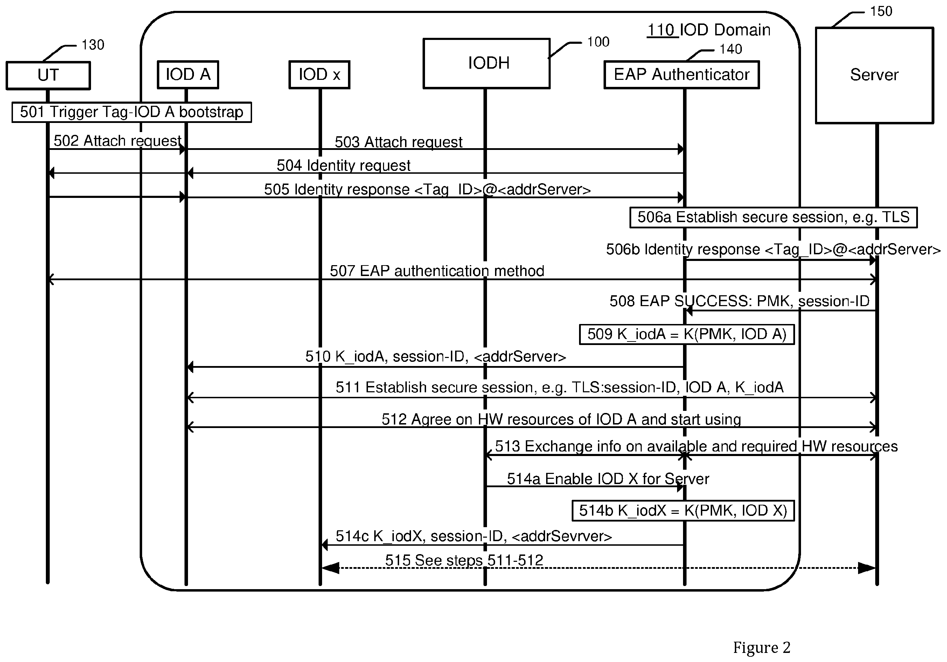

A basic scenario, illustrating how a session can be set up in a system, configured as suggested herein, will now be described in further detail, with reference to the signaling scheme of Fig. 2. In the scenario of Fig. 2, a user who is using or carrying a user tag (UT) 110, e.g., a dongle, wants to utilize a proximately located I/O user device (IOD), here represented by IOD A, forming part of an IOD domain 110, for being able to access a service, provided by server 150. The user may trigger such a process e.g. by pushing a button on the UT 130, or by activating the UT 130 in any other way, thereby initializing a bootstrapping process 501.

An UT is here to be construed as a device which is capable of communicating with an IOD via at least one short range communication protocol, and comprising at least some actuating capability, enabling the user to provide an input to the UT. A UT may therefore be anything from a constrained device, comprising e.g. communication capabilities and one button or any other type of actuator, to a smart phone, or corresponding device, comprising a more advanced UI. The UT is limited to the use of gaining access to capabilities, to be used in a specific service. Consequently, once the UT has allowed a user access to the system suggested herein, it will no longer be needed. Instead, the requested service will be accessed via capabilities of IODs.

The UT 130 sends 502, via IOD A, an attach request to the system to which IOD A is connected. The attach request is forwarded 503 by IOD A to a EAP Authenticator 140, in the system. The EAP authenticator 140 may alternatively be a local process of an IOD, such as e.g. IOD A or of an I/O user device handler (IODH) 130, configured to managing IODs within the IOD domain 110. Therefore, when referring to the EAP Authenticator 140 below, this may, alternatively be construed as referring to the IODH 100, in case IODH 100 also holds EAP Authentication capabilities. The attach request is then processed by either the IODH 100, or the EAP authenticator 140, depending on the relevant configuration.

The EAP authenticator 140, or IODH 100, responds 504 to the attach request with an EAP identity request, which is communicated back to the UT 130, typically with an EAP response. The UT 130 responds to such a request with providing its identity, identifying the UT 130, or the holder of UT 130, and pointing to a user terminal emulation server, here referred to as server 150, capable of providing a service to the user of the UT 130 via one or more of the IODs, here represented by IOD A, of the IOD domain 110.

The server 150 and other system components may correspond to one or more networked physical computers or may correspond to application server operational functionality collectively provided by any number of networked physical computers (e.g., in a cloud computing environment) which operate in accordance with one or more embodiments disclosed herein. In some embodiments, the user terminal emulation server, herein commonly referred to as a server, and other system components can be referred to as a cloud phone, because of the possible virtualization of mobile phone functionality into a cloud computing environment.

The UT identity, mentioned above, may e.g. be arranged as:
<hash(user_pub_key)>@<user_terminal emulation application_address>.

The hash of the public key provides a more compact identity of the public key of the UT 130 and may be included with a network address of the server 150. As explained above, the server 150 may provide a communication service function corresponding to, e.g. , an over-the-top Voice Over Internet Protocol (VoIP) service, Netflix service, Facebook service, Microsoft Teams meeting service, video streaming service, DRM content viewing service, social media service, video meeting service, Internet browser service or a cellular communication service, accessible to the user of an UT 130, whenever the UT 130 is located withing the range of the IOD domain 110, connected to the described system. Range is here to be referred to the range acceptable by the communication protocol used, which may be any type of short-range communication protocol.

When the UT 130 has been issued to the user, it may have also been associated with a corresponding server 150, meaning that the UT 130, in addition to its own credentials, such as e.g., private/public key pair, can be configured to have reachability information of the server 150, e.g., in the form of a Fully Qualified Domain Name (FQDN), as well as credentials for authentication of the server 150 e.g., in the form of a public key of the server 150. Likewise, the server 150 may have been configured with the credentials of the UT 130, e.g., the public key of UT 130, resulting in that the server 150 knows that the UT 130 is an entity that is authorized to request data streams and services from the server 150.

The EAP authenticator 140 identifies the server 150 based on the realm part of the identifier and forwards the request to the server 150, which is here acting as an EAP server.

The EAP authenticator 140 first establishes 506a a secure connection between itself and the server 150. The EAP messages are then passed over that secure channel between the authenticator 140 and the server 150. The secure connection may e.g. be a Transport Layer Security (TLS) session. The EAP Authenticator 140 knows that it needs to talk with the server 150, based on an identity (realm part of identity) received 506b in an EAP Identity Response. It also knows it needs to have a secure channel with the server 150. Thus, if there is not an existing secure session (typically TLS), the EAP Authenticator 140 creates such a secure session and then forwards 506b the Identity response to the server 150. The communication between the EAP Authenticator 140 and the server 150, while using EAP messages, may e.g. be carried by DIAMETER or RADIUS protocol.

The server 150 and the UT 130 will perform an EAP exchange 507 in order to authenticate the UT 130 to the server 150. The server 150 may also be authenticated to the UT 130. The authentication may require multiple messages to be exchanged between the UT 130 and the server 150 via the EAP authenticator 140.

Once the UT 130, and possibly also the server 150, is/are successfully authenticated, the server 150 send 508 a final EAP SUCCESS message to the EAP authenticator 140. The EAP SUCCESS message also carries the master key, e.g., pairwise master key (PMK), and the session-ID, where the PMK key can be referred to as the master key for the session-ID, the PMK key can be used to derive more keys for IODs, e.g., IOD X, if it is required that also this IOD is added to the session.

In an optional operation, the UT 130 at this stage may derive the master key, e.g., PMK key, but it will not (necessarily) be used by the UT 130. The master key can be used if the user wants to authorize additional IODs, e.g., IOD X, assuming the user is more in control of which IODs that are added to the session, by having to actively (possibly even physically) add more IODs to the session. A beacon protection key may also be derived from the PMK, where EAP authenticator 140 also derives a beacon protection key which it uses itself or provided to the relevant IODH, thereby allowing the IODH 100 to use this key for verifying received beacons.

The EAP authenticator 140 generates 509 an IOD specific key K_iodA from the received keying material to be used for streaming data between the server 150 and IOD A. Generating the IOD specific key K_iodA may include using the received keying material as is, or may include performing a computational operation on the received key material, such as by hashing a concatenation of the keying material and the identifier of IOD A and/or using another key derivation function (KDF), based on PMK and IOD specific information.

The EAP authenticator 140 provides 510 the IOD specific key K_iodA to IOD A, directly or via the IODH 100, together with the session-ID, exported by the server 150 and the address (e.g. FQDN) of the server 150. IOD A can use the received data to establish 511 a secure channel (e.g., TLS) between itself and the server 150. It is noted that, in some embodiments, to establish the secure channel between the IOD and the server 150, there needs to be a shared secret (which is the first IOD specific key K_iodA), an identifier for who is connecting to the server 150 and that is used to derive an IOD specific key, and an identifier (session-ID) that the server 150 can use to lookup the context from where it can derive the corresponding K_iodA.

In operation 511, IOD A can use the session-ID to indicate to the server 150 the session /keying material/authentication context to which the connection request relates. The server 150 locates context and associate keying material based on received session-ID. As background, IOD A is to connect with the server 150, using a secure channel so that the server 150 can stream or receive data from IOD A, such that IOD A needs to have keying material which it can use to establish a secure connection and the server 150 needs to verify that IOD A is authorized to send and/or receive data in the session. So, the session ID that was sent in operation 508 is what IOD A can send to the server 150 so it knows that the request relates to the authentication session that was setup for the session ID, and then locates its copy of the PMK key and any other keys, negotiated during the authentication.

The IOD uses its own identifier (e.g. IOD A) as a kind of username. The IOD A thereby tells the server 150 who it is. The EAP authenticator 140 has derived an IOD A specific key based on the PMK key, e.g., by concatenating the IOD A ID and the PMK key and then hashing the concatenated string, and may truncate the hash value to a defined length. The server 150 needs to know the ID for the IOD A, so that it can derive the same IOD A specific key provided to IOD A in, e.g., step 510.

The server 150 uses the IOD identifier to derive IOD A specific key (K_iodA). The IOD A uses the received key K_iodA as the password/authentication credential to authenticate to the server 150. In this operation IOD A and the server 150 share the same IOD A specific key which is used as a shared secret that the server 150 and IOD A use to authenticate each other and establish a secure channel therebetween. The server 150 verifies, via PSK-based authentication, that the IOD indeed possesses a valid session key (K_iodA) and is thus authorized to connect to the server 150 and exchange data with it. A secure channel is established between IOD A and the server 150.

After successful authentication, IOD A can indicate 512 its UI capabilities (e.g., display, speaker, microphone, etc.) to IODH 100, which, based on the UI capabilities, can enable data streaming to and/or from IOD A. The user may have defined policies to the IODH 100, or the server 150, regarding what operations can be enabled automatically (e.g., streaming video to a display device for the communication service) and what operations requires explicit user consent before performing (e.g., to enable microphone use for the communication service), or preconfigured policies may be applied. In a parallel optional operation, the IODH 100 may determine if other IODs are in the vicinity of the user, which have UI capabilities that can be used to provide the communication service to the user, are to be included in the ongoing session. These operations can provide the server 150 with information about what IOD capabilities could be available to the user for the service, provided in the ongoing session. Whether the IODH 100 can allow change of IODs to participate in the ongoing session may depend on e.g. which service and/or application that is running in the server 150 or other policies, applied by the IODH 100.

Alternatively, as already mentioned above, the IODH 100 may itself be capable of also acting as an EAP authenticator 140, in which case much of the "communication" between authenticator and IODH 100 is simplified, such as where the PMK is used directly by the IODH 100 to securely communicate with the server 150, or the already established secure session is re-used.

When the IODH 100 independently or triggered by the server 150, concludes, that a certain other IOD, such as e.g. IOD X, should join the ongoing session, established between the user and the IOD domain 110, the IODH 100 can request 514a the EAP authenticator 140 to generate credentials also for IOD X, e.g., K_iodx, session-ID, server 110 FQDN and provide those credentials to this other IOD.

The decision that a further IOD is required may be dependent upon one or more of: which application and/or service the user activates; ongoing application and/or service; available devices and/or their respective UI capabilities; and/or a defined configuration by the user to always try to find an IOD which has certain UI capability(ies). If the IOD receives 514c a trigger (e.g., where the trigger is the credentials etc.) needed to connect to the server 110 from the EAP authenticator140, IOD X performs operations similar to the ones described above in operations 511 to 512.

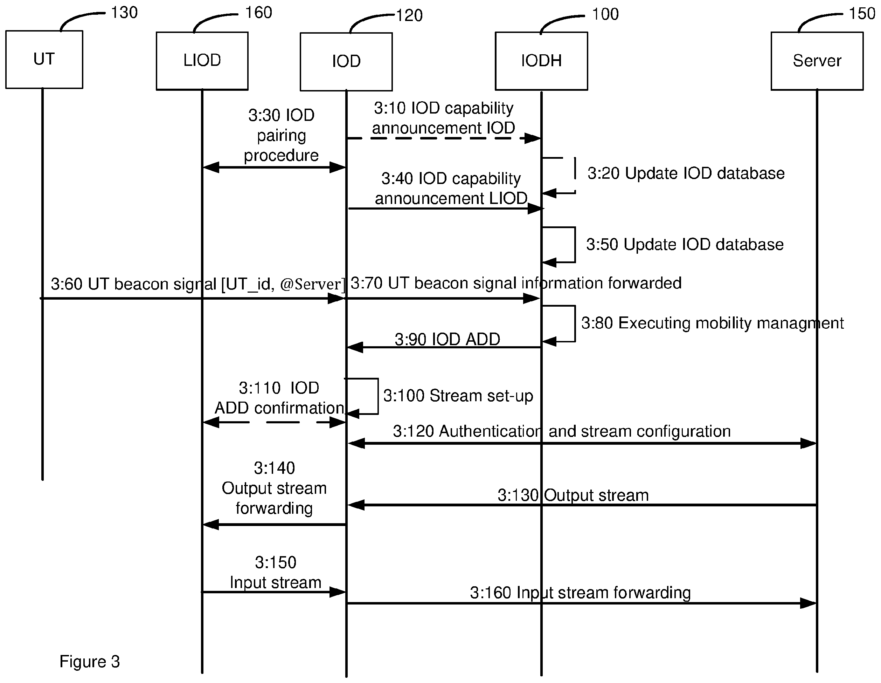

A scenario for establishing connection between at least one capability and a server via an IOD and a LIOD, according to one embodiment where no session has yet been initiated, will now be described in further detail, with reference to the signaling scheme of Fig. 3.

In a first, optional step 3:10, IOD 120 is announcing its capabilities to IODH 100, so that IODH 100 can store this information in a storage, herein referred to as an IOD database, accessible to IODH 100, according to optional step 3:20. Alternatively, IODH 100 has already access to this information, e.g. due to a configuration, executed e.g. during production or in association with sales of IOD 120. Under the conditions that LIOD 160 move into, close proximity with an IOD 120, i.e. the IOD 120 and LIOD 160 become sufficiently close to each other so that they can be either connected via a wire or be wirelessly connected via an available short-range communication protocol, IOD 120 and LIOD 160 engage in an IOD connection procedure, from hereinafter referred to as pairing, as indicated with step 3:30. Such a pairing procedure may be initiated manually, e.g. by a user, desiring to use at least one capability of the LIOD 160 in a session with server 150 initiating transmission of a beacon signal on UT 130 for this purpose. Alternatively, such a procedure may be triggered automatically, e.g. following the connection of a cable between the two devices to respective interfaces, such as e.g. USB interfaces, by applying a plug-and-play procedure, or by wirelessly initiating a pairing procedure, once one of the two devices recognize that the two devices 120, 160 are within communication range of each other. By way of example, for devices communicating via Bluetooth, the range may be somewhere between 10 and 100 m.

The pairing of step 3:30 can be referred to as a process where the IOD 120 is learning the LIOD type, based on the applied pairing protocol/s, where this process may comprise transfer of additional data such as e.g. transfer of the capabilities of LIOD 160, s. Alternatively, such additional information may be transferred subsequent to completion of the pairing. IOD 120 may also, in association with the pairing, receive an identity of the LIOD 160. Alternatively, or in addition, identities of each capability of, or at least some of the LIOD 160 may be provided to IOD 120 during or subsequent to the pairing, so that each or at least some capabilities of LIOD 160 can be identifiable via unique identities. Such identities may later be useful for managing the use and combination of the different capabilities, e.g. if available capabilities of LIOD 160 are used simultaneously in different sessions.

After a pairing has been successfully executed, IOD 120 provide an IOD capability announcement to IODH 100, where IOD 120 updates the IOD database of IODH 100 of the capabilities of LIOD 160, that it has now become aware of, which capabilities can now be construed as defining an extension of the capabilities of IOD 120, as indicated with step 3:40, followed by step 3:50, where an IOD database of IODH 100 is updated, based on the announcement. Any identity or identities, provided from LIOD 180 may, at this stage, also be provided to IODH 100. Furthermore, the updated information may comprise an indication, indicating that the capabilities are only temporary capabilities, due to the fact that they will only be available to IOD 120 as long as LIOD 160 remain connected to IOD 120. In addition, one or more communication parameters, associated with the connection between the LIOD 180 and the IOD 120 may also be provided to the IODH at this stage.

Update of an IOD database results in that IODH keep track of capabilities which are available within the IOD domain, managed by IODH 100, and, based on the data available in the IOD database, IODH 100 will be capable of determining how the capabilities available within its IOD domain are used in the most optimal way, considering also available rules on the use of the capabilities. The assumption of extension of capabilities is logical, since from the perspective of the server 150 and the IODH 100, LIOD 160 does not exist. Instead, it is only the communication between the IOD 1200 and the server 150 as well as between the IOD 120 and the IODH 100 that is known to the IODH 100 and the server 150. More specifically, since capabilities of LIOD 160 can only be accessed via the now established connection and via IOD 120, the server 150 will consider the added capabilities as capabilities of IOD 120. Once a successful connection has been established IOD 120 consequently stands prepared to forward input provided to an input capability of LIOD 160 to server 150, and to forward output provided from the server 150 to an output capability of LIOD 160, via any available session. The capability announcement may also comprise communication parameters, indicative of the, now established, connection between the LIOD 160 and the IOD 120. More specifically, the communication parameters may comprise parameters indicative of the quality of the connection, such as e.g. parameters indicating constraints and capabilities of the LIOD 160, such as e.g. maximum bit rate, supported codecs and/or supported compression techniques. Such connection parameters may later be used by the IODH 100 for e.g. estimating the bandwidth which is available between the LIOD 160 and IOD 120 and/or to determine how later to set up streams from and/or to LIOD 160 in the most optimal way. Parameters could also be used for informing the server of relevant aspects, associated with a session, such as e.g. how to synchronize streams of the session. Optionally, also IOD specific policies may be provided to IODH 100 in a capability announcement, or in a separate message, unless also such policies are already available at the IODH 100.

Once a connection has been established between the IOD 120 and LIOD 160, both IOD 120 and LIOD are capable of providing one or more of its capabilities to a requesting user, whereas, only IOD 120 of the two devices, is capable of, independently operating as a full fletched IOD 120, whereas LIOD 160 require assistance from IOD 120. In step 3:60 a beacon signal, activated by a user, and indicating a request to access a service, accessible from server 150, is transmitted by UT 130, where the beacon signal comprise at least an UT_id, identifying the transmitting UT 160, and an address to the server 150, here represented by @Server, from which the user has requested a service, which beacon signal is received and identified by IOD 120, as indicated with step 3:60, after which relevant information, including at least the UT_id and the server address, is transmitted from IOD 120 to IODH 100, as indicated with step 3:70, in case IODH has a beacon key, for verifying the received beacon. In the absence of a beacon key, received information is first sent to a standalone EAP Authenticator or an Authenticator function of IODH 100 for verification, before being sent to IODH 100 for further consideration by the IODH 100, In case this information has not been provided to IODH 100 earlier any identity or identities associated with LIOD 160 may be transmitted at this stage. Thereby this information is relevant for IODH 100 to decide on the request from the UT 130 and to manage a session associated with the request will be available for IODH 100. The session may be a session which is requested to be set up by a user of an UT 130, due to that the user is requesting a specific service, or it can refer to an already ongoing session, which e.g. due to UT mobilty require an update, with respect to available capabilities and/or streams to be applied.

Once IODH 100 has received relevant information on the beacon signal, IODH 100 uses available information, for determining how to manage available capabilities for the session in question as indicated with step 3:80. This procedure will, from hereinafter, be referred to as a mobility management process, due to that as the situation of available capabilities can change dynamically, e.g. due to possible mobility of IODs and LIODs, IODH 100, will be capable of managing distribution of available capabilities in a flexible way.

It is to be understood that in the situation of an already ongoing session, where IODH 100 is becoming aware of that IOD 120 has been extended with respect to available capabilities, due to that a LIOD has been paired to it, the decision made by the IODH 100 may be to rearrange which IODs that are to be active in the session. The IODH 100 may e.g. come to the conclusion that it will be more efficient or beneficial to reallocate some or all capabilities from one IOD to another within the same IOD domain, which could involve rearranging also how other sessions are engaging capabilities in other sessions.

It is to be understood that to what extent IODH 100 will influence how capabilities are to be used in a respective session may, to a large extent, depend on the level of detail of the request from UT 130. A very low complex UT 130 may only comprise one actuator, thereby allowing the opportunity to request only a few or even only one specific service, thereby requiring fully management of how to use available capabilities from IODH 100, whereas a more detailed request, provided e.g. from a mobile phone having UT capability, may comprise a more detailed request, with respect to e.g. preferred capabilities or preferred capability performance, thereby providing for a more specified request, which may allow the user of UT 130 to have more influence on the selection of available capabilities, to be managed by IODH 100. It is to be understood that, although Fig. 3 only comprise one IOD 120, an IODH may typically be handling a plurality of IODs, located within an IOD domain, and in case more than one of those IODs receive the same beacon signal, IODH 100 may take a decision which one or more of those IODs that are to be involved in a stream. Such a determination can be based on rules available to IODH 100, allowing certain IODs or certain capabilities of certain IODs, while other IODs and/or IOD capabilities are prohibited, under the relevant circumstances.

In the present example, the decision made at the IODH 100 is to add one or more capabilities, available at LIOD 160, possibly in combination with one or more capabilities of IOD 120. This decision is provided to IOD 120, in a message, here exemplified as IOD ADD message in step 3:90. Alternatively, in case of addition of more than one capability, a plurality of messages, each indicating one single or a group of capabilities, can be sent. IOD 120 construes the received message as an instruction to the IOD 120 to assure that the one or more capabilities indicated in the IOD ADD message are connected to server 150, either via an already ongoing session, or, via a session to be started.

In another step 3: 100, IOD 120 responds to the IOD ADD message by setting up one or more streams to be used by IOD 120 to forward content to and from LIOD 160, via one or more communication channels. Whether one or more steams need to be set up depends on which capabilities of LIOD 160 that are to be used in the session, and whether or not separate streams are required for certain capabilities or whether multiple capabilities are to be utilized via one single stream. More specifically, one stream may be set up for forwarding content entered to an input capability of LIOD 160, such as e.g. a touchpad, whereas another stream is set up for forwarding content provided from server 150 for presentation to a user via an output capability, such as e.g. a screen. In the present scenario a session is already ongoing, meaning that one or more additional streams are added to one or more already existing ones. Setting up another channel for another steam here incudes enabling for translation of a stream from one incoming communication protocol, such as e.g. WiFi,or 3GPP to an outgoing protocol, such as e.g. Bluetooth, or USB, whenever applicable. By applying separate channels and streams for separate capabilities of LIOD 160, those capabilities may be flexibly reallocated by adding and/or removing respective channels/streams. If the IOD is handling multiple streams in one session, it may also be configured to time synchronize the streams with each other. Alternatively, or in addition, time synchronization of a session, comprising a plurality of streams, may be executed at the server, based on acquired information on the connection between the LIOD and the IOD.

In an optional confirmation process, indicated as step 3: 110, which may appear before or, as indicated in Fig. 3, after or during the initiated stream set up. Confirmation, i.e. acceptance from LIOD 160 to use the requested one or more capabilities may be required before IOD 120 finalize the mentioned stream set up. A request for such a confirmation, sent from IOD 120, may according to one embodiment be responded to manually by a user of the LIOD 160, accepting or rejecting the request. According to another embodiment, a corresponding process may be executed automatically or semi-automatically. A combination may also be applied, such that e.g. automatic confirmation is applied certain time intervals of the day, whereas manual confirmation is required during other time intervals. Manual confirmation may be preferred e.g. in situations where the pairing in step 3:30 is executed automatically, as LIOD 160 is approaching IOD 120, in order for the user of LIOD 160 to maintain control over how capabilities of LIOD 160 are used, whereas in other situations.

In another step 3:120, IOD 120, assures that one or more streams are available also from IOD 120 to server 150, by authenticating IOD 120 on behalf of LIOD 160, towards server 150, as well as to configuring one or more streams between IOD 120 and server 150, whenever applicable. Unless an already existing stream is used for the session, separate streams for separate capabilities may be configured and applied, such that separate streams are applied all the way between LIOD 160 and server 150. Alternatively, this configuration forms part of step 3:100.

Once authentication and stream configuration, if applicable, have been completed, a session according to a request from UT 130, involving the added one or more capabilities from LIOD 160 may be initiated. In Fig. 3 this is illustrated by an output stream being provided to IOD 120, as indicated in step 3:130, after which the received stream is forwarded to LIOD 160, via the same stream or via a separate stream, as indicated with step 3:140. In the scenario presented in Fig. 3, also at least one input capability LIOD 140 is to be used in the session. For this reason an input stream is applied between LIOD 160 and IOD 120, as indicated with step 3:150, whereas the same stream is forwarded from IOD 120 to server 160, either via the same stream or via a separate stream, as indicated with step 3:160.

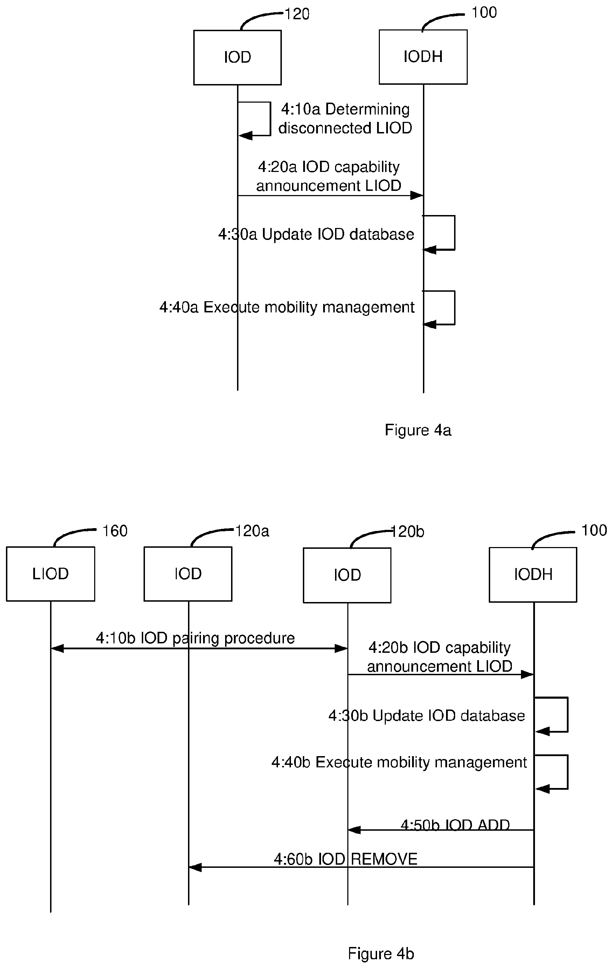

At a later stage, various circumstances may result in that either IOD 120 or LIOD 160, are completely or partly disconnected from the session. In one scenario, illustrated in Fig. 4a, IOD 120 determines, according to step 40: 10a that LIOD 160 has been disconnected, e.g. due to that LIOD 160 has moved away from IOD 120, while IOD 120 is still connected to the session. This may e.g. be detected by receiving a message, from LIOD 160, indicating disconnection, or due to absence of a response to a request, within a certain timelimit. Such a scenario will result in that the one or more capabilities, available from LIOD 160 via IOD 120, will no longer be available as an extension to IOD 120. However, the respective one or more capabilities may still be required for the session, and, thus, there is a desire to replace them. The IOD 120 will, in such a scenario, inform IOHD 100, of the updated IOD capability availability, in a new IOD capability announcement, as indicated with step 4:20a corresponding to step 3:40 of Fig. 3, after which the IOD database of IODH 100 is updated, as indicated with step 4:30a, corresponding to step 3:50 of Fig. 3. Since no indication that the ongoing session is to be terminated has been received, IODH 100 responds to such an announcement by making a decision on the received information, i.e. based on available information on available capabilities from its database, IODH 100 determines if there are substitute capabilities available, and, if this is the case, available rulesexecutes a mobility management process, as indicated with step 4:40a, corresponding to step 3:80 in Fig. 3. Dependent on the result and available capabilities, a process corresponding to steps 3:90-3:140 of Fig. 3 (not shown) is repeated, involving relevant IODs and possibly also one or more LIODs which are allocated by IODH 100 in order to uphold the capability demand for the session.

In another scenario, LIOD 160 is pairing with a second IOD 120b, in addition to an already paired first IOD 120a, as indicated with step 4:10b, thereby extending the capabilities of the second IOD 120b. In another step 4:20b, the second IOD 120b announce its capability extension to IODH 100, after which the IOD database of the IODH 100 is updated in step 4:30b. Based on the acquired information, IODH 100 will from now on be able to execute a mobility management process for determining whether any rearranging of capabilities associated to a specific session will be necessary or desired. In the present example this is done in step 4:40b. IODH 100 may decide that nothing need to be done, i.e. all capabilities presently associated to a session should maintain associated, or it may decide that a change is needed, as is done in the present example, where it is decided that at least one capability of LIOD 160 is to be added to the session. Consequently, IODH 100 sends an IOD ADD message to the second IOD 120b, as indicated with step 4:50b, instructing the second IOD 120b to add one or more capabilities to a session, followed by sending an IOD REMOVE message to the first IOD 120a, as indicated with step 4:60b, instructing the first IOD 120a to remove the corresponding one or more capabilities from the same session. Following these steps, relevant steps corresponding to steps 3:100-3:140, for setting-up and tearing down respective streams are executed. In the present example, streams may run in parallel between the two IODs 120a,120b, during a transition period.

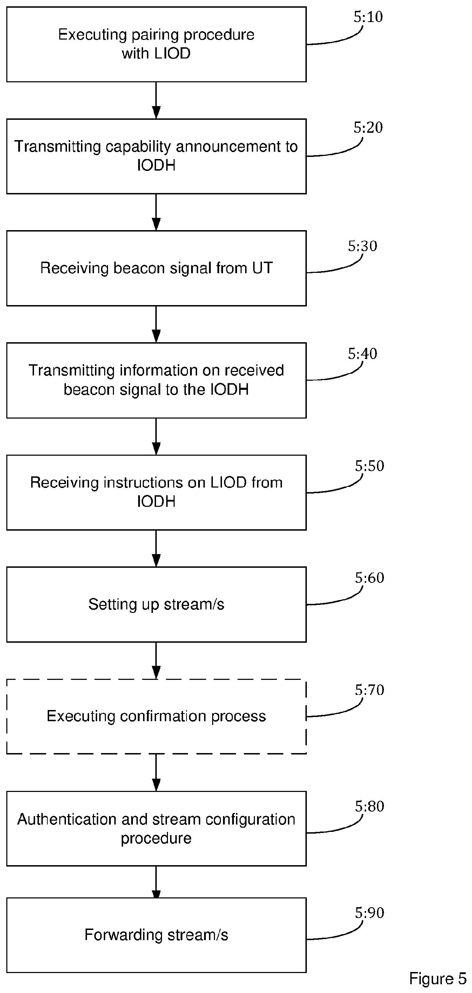

In yet another scenario, IOD 120 disconnects from a session for one reason or the other, as indicated in step 4:10c. As a consequence from such a disconnection, as indicated with step 4:20c, also LIOD 160 will consequently be disconnected, since it cannot be connected to a session without the cooperation with, or assistance from, any IOD. The changed situation, with respect to capabilities, is announced to IODH 100, after which IODH updates its IOD database accordingly, by indicating that the relevant capabilities of both IOD 120 and LIOD 160 as being unavailable, as indicated with step 4:30c. IODH 100 will respond to this by trying to maintain the connection, by determining that the relevant capability/capabilities can be found at another IODA method executable in an IOD, for providing access to capabilities of a LIOD, as described herein, will now be described in further details with reference to Fig. 5.

In a first step 5:10, IOD is executing a pairing procedure with a LIOD, where this procedure may have been triggered manually or automatically as described earlier in this document. Following a successful pairing process, i.e. LIOD has been connected to IOD, IOD transmits a capability announcement to IODH, in order to update IODH of the extended capabilities which are now available via IOD, possibly in combination with further information, such as e.g. information on the connection between the IOD and LIOD and or IOD and/or LIOD specific policies, after which an IOD database of IODH us updated accordingly, as indicated with step 5:20. This information, may alternatively also, or in a combination, comprise an indication, indicating that the one or more announced capabilities are of a temporary nature. Grade of temporarily may e.g. be derivable from historic data and time aspects, such as e.g. data on percentage of connection time. Also type of connection, may also be basis for determining grade of temporarily. From now on capabilities of LIOD may be used as extension capabilities of IOD whenever such capabilities become required, and whenever instructions to include one or more of those capabilities are received from IODH. Alternatively, the mentioned information may be provided from the IOD to the IODH in separate messages. Alternatively, or in addition, the server could provide generic policies or LIOD specific policies to the IODH.

By way of example, if a Bluetooth connectable LIOD is about to be connected to an IOD, and the server is to be involved in the connection set up, the server provides LIOD MAC and Bluetooth credentials to the IODH, which are used when the IOD and LIOD are actually connected to each other. Alternatively, the IOD and LIOD may initiate a pairing process, wherein IOD provides a LIOD ID, such as e.g. a MAC, to IODH, after which IODH responds with communication information to the IOD, which is the entity that is then using the acquired communication information, in order to establish a secure Bluetooth connection with the LIOD.

In a next step 5:30, IOD received and recognize a beacon signal, transmitted from an UT, and responds to this by transmitting relevant information on the received beacon signal to IODH. As already mentioned, such information may vary, but shall at least comprise information, allowing the IODH to identify the requesting UT, and the server from which a service has been requested. In addition, such information may comprise e.g. an indication on the signal strength of the received beacon signal or requested capabilities. Information required by IODH, indicative of the information of the beacon signal, is then provided from IOD to IODH, as indicated with step 5:40, in case the IODH has a beacon protection key, or else the information is sent via an Authenticator, which forwards the information to IODH after authentication.

In a next step 5:50, IOD receives instructions on how to proceed with the LIOD from IODH, where such instructions may comprise instructions to add certain capabilities to a certain session, which session may already be up and running, or such instructions may include the setting up of the session. Setting up of a session, may include setting up on single stream for the session, or setting up a plurality of streams, as previously described. Initiation of such a process is indicated with step 5:60.

In a next, optional step 5:70, a confirmation process may be executed between IOD and LIOD, where such a process may be automatically or manually initiated. In case of denial of a confirmation from LIOD to apply certain one or more capabilities, the mentioned process will be terminated, whereas a confirmation allows the process to commence.

The described method is then proceeded by IOD being authenticated towards the server on behalf of LIOD, and a completion of the stream set-up by executing stream configuration with respect to the server. Such a configuration procedure may e.g. include setting up separate streams between IOD and the server for input capabilities and output capabilities, respectively, unless both types of capabilities are to be assigned to one single stream. As indicated with step 5:90, streams which have been configured accordingly are handled by the IOD, such that the IOD is forwarding data entered by a user to a capability of the LIOD to the server, whereas data received from the server for presentation via another capability of the LIOD is forwarded to the LIOD. The mentioned forwarding proceeds until IOD is instructed to stop forwarding data.

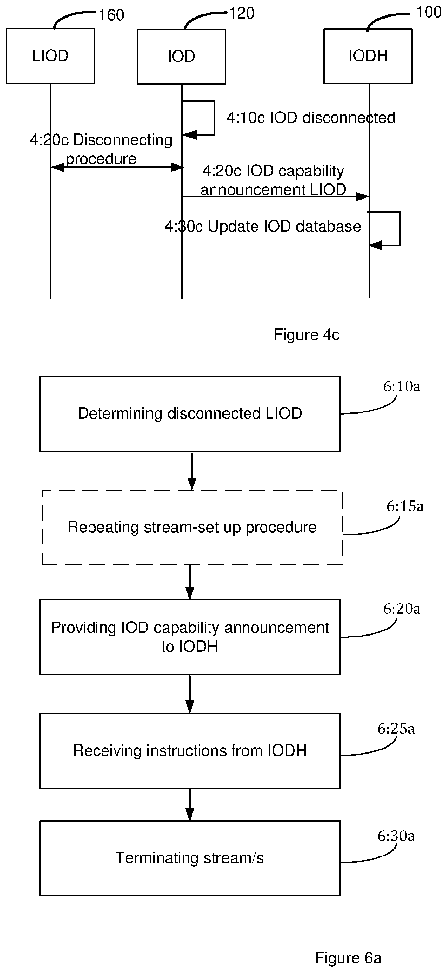

Fig. 6a is a flow chart, illustrating a method for terminating forwarding via a session, according to one embodiment, corresponding to the one described in Fig. 4a, where in a first step 6:10a, IOD is determining that a LIOD connected to it has been disconnected. Such a disconnection may have been caused by a user who has manually disconnected the two entities from each other. Alternatively, a disconnection may have been caused accidentally or due to the IOD and LIOD no longer being in proximity. In the latter scenarios, the determining of a disconnection at IOD may result in a repeated stream set-up procedure, as indicated with optional step 6:15a, before proceeding with the described disconnection process. In a next step 6:20a, possibly following one or more failed attempts to re set-up one or more streams, IOD is providing an IOD capability announcement to the IODH, informing the IODH of the new situation with respect to accessible capabilities in a capability announcement.. Next, IOD receives instructions from IODH to terminate relevant stream/s, as indicated with step 6:25a, after which IOD terminates the relevant stream between LIOD and the server, as indicated with step 6:30a

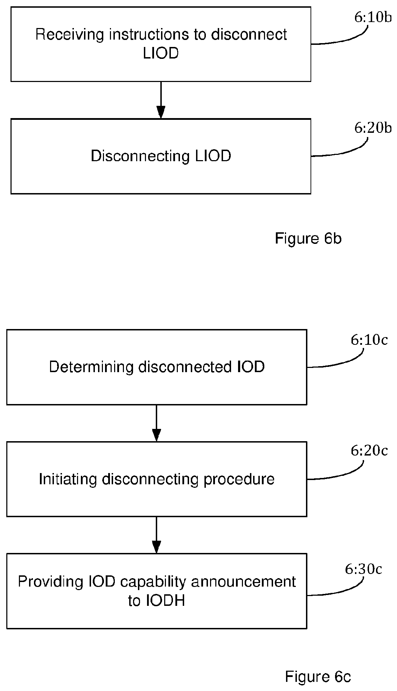

Fig. 6b is another flow chart, illustrating a method for terminating forwarding via a session, according to another embodiment, corresponding to the one described herein with reference to Fig. 4b. In a first step 6:10b, IOD receive instructions from IODH to disconnect LIOD, after which IOD follows the received instructions and initiates disconnection of relevant streams.

Fig. 6c is yet another flow chart, illustrating a method for terminating forwarding via a session, according to another embodiment, corresponding to the process described herein with reference to Fig. 4c. In a first step 6: 10c, the IOD determines that the session has been disconnected, e.g. due to an error at the IOD, or due to active disconnection by IOD, following instructions to do so from IODH. Follow such a determination, a process for disconnecting also LIOD from the IODH and the server is initiated, as indicated with step 6:20c, after which the updated capability situation, where capabilities of both IOD and LIOD are no longer available, is presented to IODH in a capability announcement, as indicated with step 6:30c.

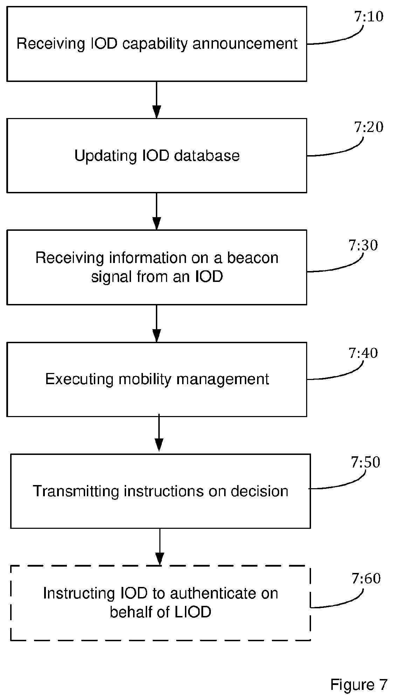

A method executed in an IODH managing an IOD when assisting a LIOD will now be described in further detail with reference to Fig. 7. In a first step 7:10, IODH receives an IOD capability announcement from an IOD, after which an IOD database of IODH is updated accordingly, as indicated with another step 7:20. Since there is no requirement for the one or more extended capabilities at this stage no further action will be required. However, whenever a new demand arises, an extended range of capabilities are available to meet such a demand.

In another step 7:30, which may appear at any time following step 7:20, i.e. once the IOD database has been updated with the latest information on capabilities available with the IOD domain managed by IODH, IODH receives information on a beacon signal, received by one of the IODs in the IOD domain, thereby announcing a request for a service from a server which is accessible from within the mentioned IOD domain, transmitted from an UT. IODH responds to reception of information on a beacon signal by making a decision, determining on whether one or more of the IODs of the IOD domain need to perform any action with respect to an ongoing or requested session, based on available capabilities, according to the IOD database, as indicated with step 7:40, after which the instructions are transmitted to the IOD, as indicated with step 7:50. The decision is typically also based on rules accessible to IODH, which rules may comprise e.g. one or more of priorities and restrictions on how to use available capabilities within the IOD domain. Optionally, in case this has not yet been done for a session, IODH may instruct the IOD to authenticate towards the server on behalf of LIOD. If already authenticated, further capabilities of the LIOD may later be added, without requiring any further authentication.

In addition to allocating one or more available capabilities for replacement of removed ones, IODH may also determine that clustering of capabilities may be beneficial, i.e. rather than having capabilities of different IODs allocated to a session, capabilities of one single IOD may be allocated to the session instead. Such a process may be executed at any time when IODH becomes aware of such a possibility, due to received announcements, indicating changes of the overall capability situation within an IOD domain. The suggested method is again repeated, once a new IOD capability announcement is received, according to step 7:10.

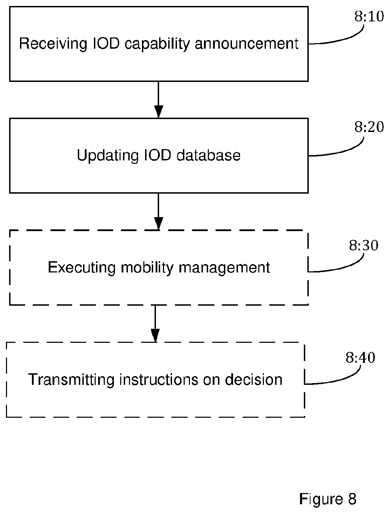

If, however, an IOD capability announcement is announcing a removal of one or more capabilities of a LIOD or a complete LIOD, a process according to Fig. 8 will be executed, where reception of the announcement, according to step 8:10, is preceded by an updating of the IOD database, according to step 8:20, after which IODH determines how to use available capabilities, according to step 8:30, i.e. IODH determines if any updates on remaining capability usage is required and possible, based on the present situation, according to the updated IOD database.

From the perspective of the IODH, one or more added capabilities, indicated in a notification, provided from the IOD, can be considered as an extension of the capabilities available from the IOD, i.e. even though the one or more reported capabilities belong to a LIOD, IODH, which is capable of communicating with IODs but not IODHs, will become aware of such capabilities and will manage such capabilities only via an IOD of a respective IOD domain.

The notification, received by the IODH may, in addition to information on one or more capabilities, available at the LIOD, also comprise further information on these capabilities and may also comprise information on the connection between the IOD and the IODH. According to one embodiment, the notification comprises an identity of the LIOD, allowing the IODH to map certain available capabilities to a specific IOD and/or LIOD. In order to simplify management, the notification may also comprise identities, identifying each or at least some relevant capabilities of a LIOD. The mentioned notification may also or alternatively comprise an explicit indication that the one or more indicated capabilities are available via the IOD on a temporary basis. The latter information may e.g. in the absence of capability specific identities, classify the one or more capabilities, indicated as temporary capabilities, as capabilities belonging to a LIOD, or other information, available to the IOD, allowing IODH to come to the conclusions that one or more capabilities are of temporary basis. Alternatively, any of the mentioned additional information, provided from the IOD to the IODH, may be provided in one or more separate messages, sent in addition to the mentioned notification. In another scenario, certain services or applications of a server require non-interruption from applied capabilities, thereby disqualifying capabilities, determined to be of a temporary nature.

The instructions may also comprise instructions to the IOD, on how the communication between the LIOD and the server, or the IOD, to which the LIOD is connected, and the server, e.g. if a session is to be arranged via one single stream between the IOD and the server, or if each or some of the capabilities of the LIOD shall have separate streams allocated to them.

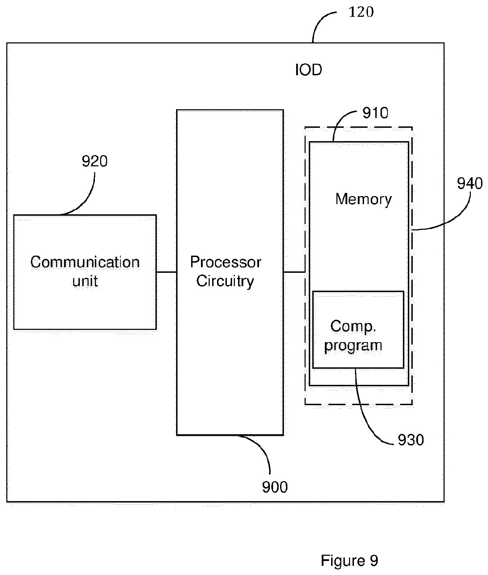

Once a new announcement is received by the IODH, the process described above is repeated. An IOD configured to assist a LIOD as described herein according to on embodiment will now be described in further detail with refence to Fig. 9. The IOD may only have the purpose of assisting LIODs, located in close vicinity of the IOD, thereby acting as an IOD switch or IOD anchor, acting in cooperation with an IODH when allowing a LIOD to be accessed by a user. In addition to acting as an IOD switch or IOD anchor, the IOD may also operate as a conventional IOD, where, in the latter case, the IOD is considered by the IODH as an IOD which, when connected to one or more LIODs, is an IOD with extended capabilities, provided from the LIOD.

The IOD 120 of Fig. 9 comprises processor circuitry 900 and a memory 910, comprising computer readable instructions, which, when executed by the processing circuitry 900, causes the IOD 120 to transmit a notification to an IODH via a communication unit 920, thereby announcing at least one capability, available at a LIOD, upon having established a connection with the LIOD. More specifically, the IOD 120 is configured to notify IODH of an update in the capabilities available via the IOD 120, in this case, as an extension of capabilities, provided by the LIOD.

Once the IOD 120 has updated IODH of the extended capabilities, these capabilities may be used in a session, as soon as the IODH becomes aware of a received beacon signal, which is indicating a request for at least one of the capabilities of LIOD. The IOD 120 is configured to received a beacon signal, associated with a session, from an UT, and configured to transmit information on the beacon signal to the IODH, thereby informing the IODH of the request of the UT, and thereby also triggering the IODH to determine if there are capabilities available within the IOD domain to fulfil the mentioned request. The memory 910 can be any combination of random access memory (RAM) and/or read only memory (ROM). The memory 910 also comprises persistent storage, which, for example, can be any single one or combination of magnetic memory, optical memory, solid-state memory or even remotely mounted memory. The processing circuitry 900 may comprise e.g. one or more central processing unit (CPU), multiprocessor or digital signal processor (DSP).

Assuming that the IODH determines that at least one capability of a LIOD is to be used in a session, and receives instructions from the IODH, instructing the IOD 120 that the at least one capability of the LIOD is to be added to the session. In order to respond to such a scenario, the IOD 120 is configured to forward at least one stream, associated with a session and the at least one capability, available at the LIOD, to and/or from the LIOD. More specifically the IOD 120 is configured to forward one or more streams from a server to the LIOD, forwarding data to be presented or rendered to the user of the UT, and/or to forward one or more streams, entered by the user into a capability of LIOD, from the LIOD to the server. For being able to forwarding required streams accordingly, the IOD 120 is configured to set up one or more streams with the LIOD, which has not already been set up, based on the received indication from the IODH. According to one embodiment, the IOD 120 is configured to set up one stream to be used for a plurality of capabilities of a LIOD, whereas according to another embodiment, the IOD 120 is instead configured to set up separate streams for each capability or one or more groups of capabilities.

If a plurality of streams are set up for a specific session, the IOD 120 may also be configured to time synchronize these streams, using any conventional way of time synchronizing the streams of the session. The IOD 120 can, according to one embodiment, be configured to connect automatically with the LIOD once the two come in close proximity with each other, i.e. come in sufficiently close proximity with each other so that the applied short range communication protocol, or protocols, can initiate communication with each other. According to another embodiment, the IOD 120 is configured to connect to the LIOD when the two entities are connected to each other via a wire, i.e. due to that a wire has manually been connected to compatible interfaces of the two entities, or wirelessly. It is to be understood that, in case the two entities are applying different protocols, the IOD 120 is also, according to one embodiment configured to translate an incoming protocol to an outgoing protocol, by applying any available translation procedure.

For the purpose of providing information updates on capabilities, the IOD 120 may be configured to provide additional information to the IODH in the same notification, or in a separate notification or message, thereby providing further information to the IODH, which can be useful for the IODH when the IODH evaluates and determines a preferable option for how to allocate capabilities to a session. Such information may comprise one or both of an identity of the IODH, or identities of one or more capabilities of the IODH. The IOD 120 may also be configured to provide information to the IODH, indicating that an extension of one or more capabilities is on a temporary basis.

According to another embodiment, the IOD is configured to provide one or more communication parameters, indicative of the connection, established between the IOD 120 and the LIOD, where the one or more communication parameters may comprise e.g. one or more of parameters, indicative of connection quality or attribute characteristics, thereby allowing the IODH to acquire further information which may be valuable when selecting suitable capabilities to be used in a session.

According to another embodiment, the IOD 120 is configured to also provide one or more IOD specific policies to be applied when connecting to the IOD 120. Such that, in addition to policies already applicable by the IODH, IOD specific policies may be applied as well.

According to another embodiment, the IOD 120 is configured to authenticate an UT towards the server, prior to the mentioned forwarding, unless such authentication procedure has been executed already by the IOD 120, as well as to get authenticated on behalf of the LIOD.

When one or more capabilities of a LIOD , for one reason or the other, is/are no longer to be used in a session, the IOD 120 need to assist in disconnecting connections, associated with such one or more capabilities. According to one embodiment, the IOD 120 is configured to determine that a connection, associated with the mentioned one or more capability, between the IOD 120 and the LIOD, has been disconnected and to transmit an announcement to the IODH, notifying the IODH that at least one of the at least one capability of the LIOD is/are no longer available from the LIOD. Such a scenario may e.g. have been initiated by a user of the UT, having actively disconnected the LIOD from the IOD 120. The mentioned determining may comprise determining that only one, some or all capabilities have been disconnected from the IOD. Accordingly, the IOD 120 is also configured to receive instructions, instructing the IOD on how to proceed after the disconnection.

According to another embodiment, where disconnection or termination of a stream is caused by a decision made by the IODH, the IOD 120 is configured to receive and interpret instructions from the IODH, notifying the IOD 120 that the at least one stream is to be terminated, and to terminate at least one stream, associated with a specific session, in response to having received such instructions. The latter scenario may e.g. be due to that a capability of the LIOD, presently used in a session, is to be replaced by another LIOD or IOD. The IOD 120 is also configured to participate in authenticating at least one of an UT, both in a situation where the LIOD is a combined UT and LIOD,and where it is a conventional LIOD, and the IOD 120, on behalf of the LIOD, towards the server, due to the fact that the LIOD is uncapable of authenticating towards the server by itself.

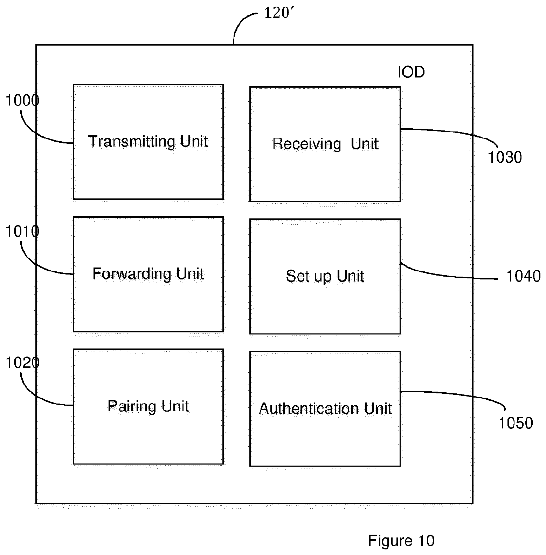

An IOD 120', according to another embodiment, is presented in further detail, with reference to Fig. 10, where the IOD 120' is provided as a device, comprising a plurality of functional entities, configured to interact so that the IOD 120' is capable of assisting a LIOD as described herein. More specifically, the IOD 120' of Fig. 10 comprise a transmitting unit, or a communication unit 1000, configured to transmit a notification to an IODH, announcing at least one capability, available at a LIOD, once the IOD 120' has established a connection with the LIOD, corresponding to step 5:20 of Fig. 5. The transmitting unit 1000 is also configured to transmit information on a beacon signal, once such information has been received by the IOD from a user tag, UT, corresponding to step 5:30 of Fig. 5. The IOD 120' also comprise a forwarding unit 1010, configured to forward at least one stream, associated with the requested session and the at least one capability, available at the LIOD, to and/or from the LIOD, in response to having received an indication from the IODH, indicating that at least one capability fo the LIOD is to be added to the session, corresponding to step 5:90 of Fig. 5.

Furthermore, the IOD 120' comprise a pairing or connecting unit 1020, capable of pairing the IOD 120' to the LIOD, corresponding to step 5:10 of Fig. 5, and a receiving unit 1030, configured to receive a beacon signal, corresponding to step 5:30 of Fig. 5, as well as instructions, from the IODH of the respective IOD domain, corresponding to step 5:50 of Fig. 5. In addition, the IOD 120'comprise a set up unit 1040, configured to set up and configure relevant streams between a server and the LIOD, corresponding to step 5:60 of Fig. 5, and an authentication unit 1050, configured to authenticate on behalf of the LIOD, corresponding to step 5:80 of Fig. 5. The set up unit 1040 is also configured to terminate previously set up streams, following the reception of instructions from the IODH to do so.

The computer readable instructions mentioned above, may, according to one aspect, be arranged as a computer program 930, and such a computer program 930, may form part of a computer program product 940, where the computer program product 940 may be e.g. an optical disc, such as a Compact Disc (CD), a Digital Versatile Disc (DVD) or a Blu-Ray disc.

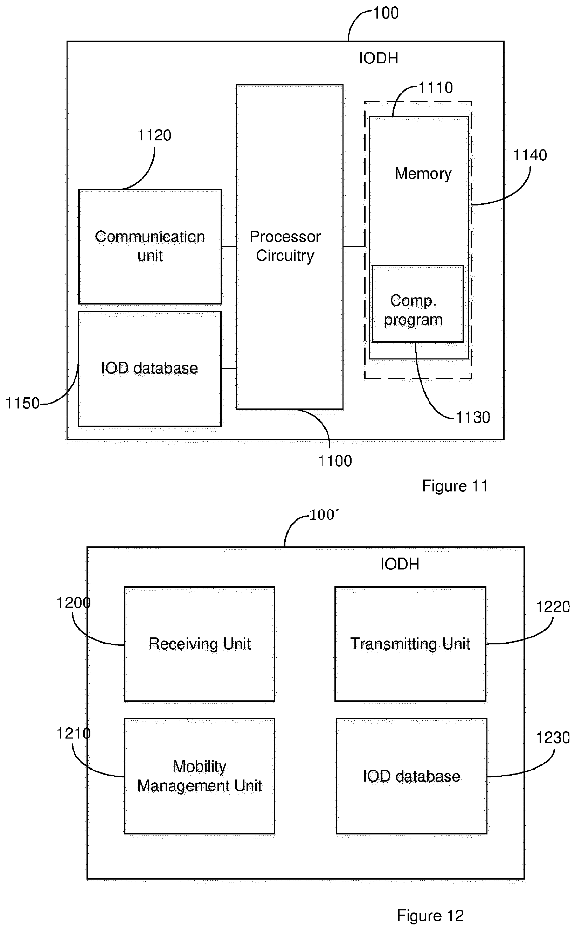

An IODH, capable of managing IODs and LIODs, with assistance from an IOD, in an IOD domain, according to one embodiment, will now be described in further detail with refence to Fig. 11. The IODH 100 of Fig. 11 comprises processor circuitry 1100 and a memory 1110, comprising computer readable instructions, which, when executed by the processing circuitry 1100, causes the IODH 100 to receive an announcement from an IOD, indicating at least one capability, available at a LIOD which is connected to the IOD. The IODH 100 is also configured to receive information on a beacon signal from the IOD, wherein the beacon signal, which is associated with a session, requested by an UT, has previously been received by the IOD from the UT. The IODH 100 is also configured to determine that at least one of the at least one capability is to be added to the session, wherein the determination is based on the at least one capability, in a process, which can be referre to as a mobility management process.

The IODH 100 is also configured to transmit instructions to the IOD, instructing the IOD to add at least one of the at least one capability to the session, in response to having determined that at least one of the at least one capability is to be added to the session, wherein the determination is based on the at least one capability. The IODH 100 construes capabilities of a LIOD as extensions of the IOD, to which the LIOD is connected, rather than capabilities of a LIOD, since connection between the LIOD and the IODH 100 has to go via the IOD. In addition to being able to identify and process information on available capabilities, the IODH 100 may be configured to identify and process additional information, such as e.g. an identity of the LIOD, identities of at least one capability, indicated as available at the LIOD, and an indication that the announced one or more capability is/are available via the IOD on a temporary basis, and to store such information in an IOD database 1150, for later retrieval during the mobility management process.

The IODH 100 is, according to one embodiment, configured to instruct the IOD to authenticate with the sever, on behalf of the LIOD, since the LIOD is uncapable of doing this on its own. According to another embodiment, the IODH 100 is configured to instruct the IOD to add the capability via at least one stream, dedicated for the at least one capability of the LIOD. Thereby, the IOD may be instructed to forward information to and/or from specific capabilities of a LIOD via one or more streams.

Once one or more capabilities of a LIOD are, for one reason or the other, no longer available for use in a session, the IODH 100 need to be able to instruct the relevant IOD to disconnect relevant connection/s. Therefore the IODH 100 is also configured to handle such disconnection scenarios. The IODH 100 may e.g. have determined that no capability of the LIOD is to be used by the session any longer. The reason for this may e.g. be that an exchange of capabilities is preferred, or it may be determined that an ongoing session has been terminated. According to one embodiment, IODH 100 is configured to receive an announcement from the IOD, notifying the IODH 100 that at least one capability are no longer available to the IOD from the LIOD. The IODH 100 is configured to respond to such a notification by taking a decision on how to proceed with the relevant session, when executing a mobility management process. According to one embodiment, IODH 100 is configured to transmit instructions to the IOD, instructing the IOD to terminate at least one stream or connection between the IOD and the LIOD, wherein such at least one stream may be a capability specific stream, i.e. a stream used for a specific capability or group of capabilities.

According to one embodiment IODH 100 is configured to map certain available capabilities to a specific IOD and/or LIOD, and to store such a mapping in the IOD database. An IODH 100', according to another embodiment, is presented in further detail, with reference to Fig. 12, A receiving unit 1200, is configured to receive an announcement, from an IOD, indicating at least one capability, available at a LIOD, connected to the IOD, corresponding to step 7:10 of Fig. 7, and configured to receive information on a beacon signal, from an IOD, where the received information is associated with a session, requested by an UT, which beacon signal has been received by the IOD, corresponding to step 7:30 of Fig. 7. A mobility management unit 1210, is configured to execute a mobility management process whenever required, for determining how to use available capabilities, based on information received from the IOD, corresponding to step 7:40 of Fig 7, and a transmitting unit 1220 is configured to transmit instructions, to the IOD, instructing the IOD to add at least one of the at least one capability to the session, in response to having determined, by the determining unit 1210, based on the at least one capability, available at the LIOD, that at least one of the at least one capability is to be added to the session., corresponding to step 7:50 of Fig 7. The transmitting unit 1220 is also capable of transmitting an instruction to remove at least one capability, in response to the mobility management unit having instead determined that at least one capability is to be removed from a session. Furthermore, the IODH 100' is configured to store information received in announcement or in information on beacon signals, in an IOD database 1230, whereas the mobility management unit 1210 is configured to access information from the IOD database, as well as policy information from memory of the IODH 100', when about to executing a mobility management process.

The computer readable instructions mentioned above, may, according to one aspect, be arranged as a computer program 1130, and such a computer program 1130, may form part of a computer program product 1140, where the computer program product 1140 may be e.g. an optical disc, such as a Compact Disc (CD), a Digital Versatile Disc (DVD) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The scope of protection of the invention is defined by the following claims.

## Claims

1. A method at an Input/Output Device, IOD, for forwarding a session between a server and a legacy IOD, LIOD, the method comprising:
- transmitting (5:20), to an Input/Output Handler, IODH, a notification, announcing at least one capability, available at a LIOD, upon having established (5:10) a connection between the IOD and the LIOD;
- transmitting (5:40), to the IODH, information on a beacon signal received by the IOD from a user tag, UT, wherein the beacon signal is associated with a session, to which the UT require access, and
- forwarding (4:90) at least one stream, associated with the session and the at least one capability, available at the LIOD, to and/or from the LIOD, in response to having received an indication from the IODH that the at least one capability of the LIOD is to be added to the session.

2. A method at an Input/Output device handler, IODH, for providing a session, provided from a server, access to at least one capability, available at a Legacy Input/Output Device, LIOD, the method comprising:
- receiving (7:10), from an input/output device, IOD, an announcement, indicating at least one capability, available at a LIOD, connected to the IOD;
- receiving (7:30), from the IOD, information on a beacon signal, received by the IOD, from a user tag, UT, wherein the beacon signal is associated with a session, requested by the UT, and
- transmitting (7:50), to the IOD, instructions, instructing the IOD to add at least one of the at least one capability to the session, in response to having determined (7:40), based on the at least one capability, available at the LIOD, that at least one of the at least one capability is to be added to the session.

3. An Input/Output Device, IOD, (120, 120') for forwarding a session between a server and a legacy IOD, LIOD, the IOD being configured to:
- transmit, to an Input/Output Handler, IODH, a notification, announcing at least one capability, available at a LIOD, upon having established a connection between the IOD and the LIOD;
- transmit, to the IODH, information on a beacon signal received by the IOD from a user tag, UT, wherein the beacon signal is associated with a session, to which the UT require access, and
- forward at least one stream, associated with the session and the at least one capability, available at the LIOD, to and/or from the LIOD, in response to having received an indication from the IODH, indicating that the at least one capability of the LIOD is to be added to the session.

4. The IOD (120, 120') according to claim 3, wherein the IOD is configured to establish the connection with the LIOD upon having determined, by the IOD, that the IOD and LIOD are in close proximity to each other.

5. The IOD (120, 120') according to claim 3 or 4, wherein the notification of the at least one capability, available at the LIOD further comprises at least one of:
- an identity of the LIOD;
- at least one identity of at least one capability, available at the LIOD;
- an indication, indicating that the at least one capabilities of the LIOD is/are available on a temporary basis, and
- at least one communication parameter, indicative of the connection established between the IOD (120, 120') and the LIOD.

6. The IOD (120, 120') according to any of claims 3-5, wherein the IOD (120, 120') is configured to transmit, to the IODH, at least one policy, decisive for the usage of the at least one capability of the LIOD.

7. The IOD (120, 120') according to any of claims 3-6, wherein the IOD (120, 120') is configured to be authenticated prior to forwarding the at least one stream.

8. The IOD (120, 120') according to any claims 3-7, wherein the IOD (120, 120') is configured to translate the at least one stream from an incoming to an outgoing communication protocol during forwarding.

9. The IOD (120, 120') according to any of claims 4-8, wherein the IOD (120, 120') is configured to initiate the forwarding in response to having received, from the LIOD, an acceptance of usage of the at least one capability of the LIOD.

10. The IOD (120, 120') according to any of claims 3-9, wherein IOD (120, 120') is configured to associate the session with a plurality of streams, each steam being dedicated to and set up for one of the LIOD or the IOD (120, 120').

11. The IOD (120, 120') according to claim 10, wherein the IOD (120, 120') is configured to dedicate at least one of the streams to a specific capability of the LIOD.

12. An Input/Output device handler, IODH, (100, 100') for providing a session, provided from a server, access to at least one capability, available at a Legacy Input/Output Device, LIOD, the IODH, (100, 100') being configured to:
- receive, from an input/output device, IOD, an announcement, indicating at least one capability, available at a LIOD, connected to the IOD;
- receive, from the IOD, information on a beacon signal, received by the IOD, from a user tag, UT, wherein the beacon signal is associated with a session, requested by the UT, and
- transmit, to the IOD, instructions, instructing the IOD to add at least one of the at least one capability to the session, in response to having determined, based on the at least one capability, available at the LIOD, that at least one of the at least one capability is to be added to the session.

13. The IODH, (100, 100') according to claims 12, wherein the IODH, (100, 100') is construing the announcement about at least one capability, available at the LIOD, as an extension of the capabilities available at the IOD.

14. The IODH, (100, 100') according to any of claims 12 or 13, wherein the announcement further comprises at least one of:
- an identity of the LIOD;
- a respective identity of at least one capability, available at the LIOD;
- an indication that the capabilities of the LIOD are available via the IOD on a temporary basis, and
- at least one communication parameter, indicative of the connection established between the IOD and the LIOD.

15. The IODH, (100, 100') according to any of claims 12-14, wherein the IODH, (100, 100') is further configured to determine and instruct the IOD that the addition is to be executed via at least one stream, dedicated for the at least one capability of the LIOD.

16. The IODH, (100, 100') according to any of claims 12-15, wherein the IODH, (100, 100') is further configured to determine and instruct the IOD that the session shall be associated with a plurality of streams.

17. The IODH, (100, 100') according to claim 16, wherein the IODH, (100, 100') is configured to dedicate at least one stream to a specific capability of the LIOD.

## Patentansprüche

1. Verfahren bei einer Eingabe-/Ausgabe-Vorrichtung, IOD, zum Weiterleiten einer Sitzung zwischen einem Server und einer älteren IOD, LIOD, wobei das Verfahren Folgendes umfasst:
- Übermitteln (5:20), an ein Eingabe-/Ausgabe-Steuerprogramm, IODH, einer Benachrichtigung, die mindestens eine bei einer LIOD verfügbare Fähigkeit ankündigt, nachdem es eine Verbindung zwischen der IOD und der LIOD hergestellt (5:10) hat;
- Übermitteln (5:40), an das IODH, von Informationen über ein vom IOD von einem Benutzer-Tag, UT, empfangenes Beacon-Signal, wobei das Beacon-Signal mit einer Sitzung verknüpft ist, auf die das UT Zugriff benötigt, und
- Weiterleiten (4:90) mindestens eines Streams, der mit der Sitzung und der mindestens einen Fähigkeit, die am LIOD verfügbar ist, verknüpft ist, zu und/oder von dem LIOD, als Reaktion darauf, eine Anzeige von dem IODH empfangen zu haben, dass die mindestens eine Fähigkeit des LIOD der Sitzung hinzugefügt werden soll.

2. Verfahren bei einem Eingabe-/Ausgabe-Vorrichtungssteuerprogramm, IODH, zum Bereitstellen für eine Sitzung, die von einem Server bereitgestellt wird, eines Zugriffs auf mindestens eine Fähigkeit, die bei einer älteren Eingabe-/Ausgabe-Vorrichtung, LIOD, verfügbar ist, wobei das Verfahren Folgendes umfasst:
- Empfangen (7:10), von einer Eingabe-/Ausgabe-Vorrichtung, IOD, einer Ankündigung, die mindestens eine Fähigkeit anzeigt, die auf einer mit der IOD verbundenen LIOD verfügbar ist;
- Empfangen (7:30), von der IOD, von Informationen über ein Beacon-Signal, das von der IOD von einem Benutzer-Tag, UT, empfangen wird, wobei das Beacon-Signal mit einer Sitzung verknüpft ist, die vom UT angefordert wird, und
- Übermitteln (7:50), an die IOD, von Anweisungen, die die IOD anweisen, mindestens eine von der mindestens einen Fähigkeit zur Sitzung hinzuzufügen, als Reaktion darauf, festgestellt zu haben (7:40), auf Grundlage der mindestens einen Fähigkeit, die bei der LIOD verfügbar ist, dass mindestens eine von der mindestens einen Fähigkeit der Sitzung hinzugefügt werden soll.

3. Eingabe-/Ausgabe-Vorrichtung, IOD, (120, 120') zum Weiterleiten einer Sitzung zwischen einem Server und einer älteren IOD, LIOD, wobei die IOD zu Folgendem konfiguriert ist:
- Übermitteln, an ein Eingabe-/Ausgabe-Steuerprogramm, IODH, einer Benachrichtigung, die mindestens eine bei einer LIOD verfügbare Fähigkeit ankündigt, nachdem es eine Verbindung zwischen der IOD und der LIOD hergestellt hat;
- Übermitteln, an das IODH, von Informationen über ein vom IOD von einem Benutzer-Tag (UT) empfangenes Beacon-Signal, wobei das Beacon-Signal mit einer Sitzung verknüpft ist, auf die das UT Zugriff benötigt, und
- Weiterleiten mindestens eines Streams, der mit der Sitzung und der mindestens einen Fähigkeit, die am LIOD verfügbar ist, verknüpft ist, zu und/oder von dem LIOD, als Reaktion darauf, eine Anzeige von dem IODH empfangen zu haben, die anzeigt, dass die mindestens eine Fähigkeit des LIOD der Sitzung hinzugefügt werden soll.

4. IOD (120, 120') nach Anspruch 3, wobei die IOD dafür konfiguriert ist, die Verbindung mit der LIOD herzustellen, nachdem, durch die IOD, festgestellt worden ist, dass sich die IOD und die LIOD in unmittelbarer Nähe zueinander befinden.

5. IOD (120, 120') nach Anspruch 3 oder 4, wobei die Benachrichtigung über die mindestens eine bei der LIOD verfügbare Fähigkeit weiter mindestens eines von Folgendem umfasst:
- eine Identität der LIOD;
- mindestens eine Identität mindestens einer Fähigkeit, die bei der LIOD verfügbar ist;
- eine Anzeige, die anzeigt, dass die mindestens eine von Fähigkeiten des LIOD vorübergehend verfügbar ist/sind, und
- mindestens einen Kommunikationsparameter, der die zwischen der IOD (120, 120') und der LIOD hergestellte Verbindung anzeigt.

6. IOD (120, 120') nach einem der Ansprüche 3-5, wobei die IOD (120, 120') dafür konfiguriert ist, an das IODH mindestens eine Richtlinie zu übermitteln, die für die Nutzung der mindestens einen Fähigkeit der LIOD entscheidend ist.

7. IOD (120, 120') nach einem der Ansprüche 3-6, wobei die IOD (120, 120') dafür konfiguriert ist, vor dem Weiterleiten des mindestens einen Streams authentifiziert zu werden.

8. IOD (120, 120') nach einem der Ansprüche 3-7, wobei die IOD (120, 120') dafür konfiguriert ist, während des Weiterleitens den mindestens einen Stream von einem eingehenden zu einem ausgehenden Kommunikationsprotokoll zu übersetzen.

9. IOD (120, 120') nach einem der Ansprüche 4-8, wobei die IOD (120, 120') dafür konfiguriert ist, die Weiterleitung als Reaktion darauf einzuleiten, dass sie, von der LIOD, eine Nutzungsbestätigung der mindestens einen Fähigkeit der LIOD empfangen hat.

10. IOD (120, 120') nach einem der Ansprüche 3-9, wobei die IOD (120, 120') dafür konfiguriert ist, die Sitzung mit einer Vielzahl von Streams zu verknüpfen, wobei jeder Stream entweder der LIOD oder der IOD (120, 120') zugeordnet und für diese eingerichtet ist.

11. IOD (120, 120') nach Anspruch 10, wobei die IOD (120, 120') dafür konfiguriert ist, mindestens einen der Streams einer spezifischen Fähigkeit der LIOD zuzuordnen.

12. Eingabe-/Ausgabe-Vorrichtungssteuerprogramm, IODH, (100, 100') zum Bereitstellen für eine Sitzung, die von einem Server bereitgestellt wird, eines Zugriffs auf mindestens eine Fähigkeit, die bei einer älteren Eingabe-/Ausgabe-Vorrichtung, LIOD, verfügbar ist, wobei die IODH, (100, 100') zu Folgendem konfiguriert ist:
- Empfangen, von einer Eingabe-/Ausgabe-Vorrichtung, IOD, einer Ankündigung, die mindestens eine Fähigkeit anzeigt, die auf einer mit der IOD verbundenen LIOD verfügbar ist;
- Empfangen, von der IOD, von Informationen über ein Beacon-Signal, das von der IOD von einem Benutzer-Tag, UT, empfangen wird, wobei das Beacon-Signal mit einer Sitzung verknüpft ist, die vom UT angefordert wird, und
- Übermitteln, an die IOD, von Anweisungen, die die IOD anweisen, mindestens eine von der mindestens einen Fähigkeit zur Sitzung hinzuzufügen, als Reaktion darauf, festgestellt zu haben, auf Grundlage der mindestens einen Fähigkeit, die bei der LIOD verfügbar ist, dass mindestens eine von der mindestens einen Fähigkeit der Sitzung hinzugefügt werden soll.

13. IODH, (100, 100') nach Anspruch 12, wobei das IODH (100, 100') die Ankündigung über mindestens eine Fähigkeit, die bei der LIOD verfügbar ist, als eine Erweiterung der bei der IOD verfügbaren Fähigkeiten auslegt.

14. IODH (100, 100') nach einem der Ansprüche 12 oder 13, wobei die Ankündigung weiter mindestens eines von Folgendem umfasst:
- eine Identität der LIOD;
- eine jeweilige Identität mindestens einer Fähigkeit, die bei der LIOD verfügbar ist;
- ein Anzeige, dass die Fähigkeiten des LIOD vorübergehend über die IOD verfügbar sind, und
- mindestens einen Kommunikationsparameter, der die zwischen der IOD und der LIOD hergestellte Verbindung anzeigt.

15. IODH (100, 100') nach einem der Ansprüche 12-14, wobei das IODH (100, 100') weiter dafür konfiguriert ist, festzustellen und die IOD anzuweisen, dass die Hinzufügung über mindestens einen Stream ausgeführt werden soll, der für die mindestens eine Fähigkeit der LIOD zugewiesen ist.

16. IODH (100, 100') nach einem der Ansprüche 12-15, wobei das IODH (100, 100') weiter dafür konfiguriert ist, festzustellen und die IOD anzuweisen, dass die Sitzung mit einer Vielzahl von Streams verknüpft werden soll.

17. IODH (100, 100') nach Anspruch 16, wobei das IODH (100, 100') dafür konfiguriert ist, mindestens einen Stream einer spezifischen Fähigkeit des LIOD zuzuweisen.

## Revendications

1. Procédé sur un dispositif d'entrée/sortie, IOD, pour transférer une session entre un serveur et un IOD hérité, LIOD, le procédé comprenant :
- la transmission (5:20), à un gestionnaire d'entrée/sortie, IODH, d'une notification annonçant au moins une capacité, disponible sur un LIOD, après avoir établi (5:10) une connexion entre l'IOD et le LIOD ;
- la transmission (5:40), à l'IODH, d'informations sur un signal de balise reçu par l'IOD à partir d'une étiquette utilisateur, UT, dans lequel le signal de balise est associé à une session, à laquelle l'UT requiert un accès, et
- le transfert (4:90) d'au moins un flux, associé à la session et à la au moins une capacité, disponible sur le LIOD, vers et/ou depuis le LIOD, en réponse à la réception d'une indication reçue à partir de l'IODH selon laquelle la au moins une capacité du LIOD doit être ajoutée à la session.

2. Procédé sur un gestionnaire de dispositif d'entrée/sortie, IODH, pour fournir à une session, fournie par un serveur, l'accès à au moins une capacité, disponible sur un dispositif d'entrée/sortie hérité, LIOD, le procédé comprenant :
- la réception (7:10), à partir d'un dispositif d'entrée/sortie, IOD, d'une annonce, indiquant au moins une capacité, disponible sur un LIOD, connecté à l'IOD ;
- la réception (7:30), à partir de l'IOD, d'informations sur un signal de balise, reçu par l'IOD, à partir d'une étiquette utilisateur, UT, dans lequel le signal de balise est associé à une session, demandée par l'UT, et
- la transmission (7:50), à l'IOD, d'instructions donnant l'ordre à l'IOD d'ajouter au moins une de la au moins une capacité à la session, en réponse à la détermination (7:40), sur la base de la au moins une capacité, disponible sur le LIOD, qu'au moins une de la au moins une capacité doit être ajoutée à la session.

3. Dispositif d'entrée/sortie, IOD, (120, 120') pour transférer une session entre un serveur et un IOD hérité, LIOD, l'IOD étant configuré pour :
- transmettre, à un gestionnaire d'entrée/sortie, IODH, une notification annonçant au moins une capacité, disponible sur un LIOD, après avoir établi une connexion entre l'IOD et le LIOD ;
- transmettre, à l'IODH, des informations sur un signal de balise reçu par l'IOD à partir d'une étiquette utilisateur, UT, dans lequel le signal de balise est associé à une session, à laquelle l'UT requiert un accès, et
- transférer au moins un flux, associé à la session et à la au moins une capacité, disponible sur le LIOD, vers et/ou depuis le LIOD, en réponse à la réception d'une indication à partir de l'IODH, indiquant que la au moins une capacité du LIOD doit être ajoutée à la session.

4. IOD (120, 120') selon la revendication 3, dans lequel l'IOD est configuré pour établir la connexion avec le LIOD après la détermination, par l'IOD, que l'IOD et le LIOD sont très proches l'un de l'autre.

5. IOD (120, 120') selon la revendication 3 ou 4, dans lequel la notification de la au moins une capacité, disponible sur le LIOD, comprend en outre au moins un parmi :
- une identité du LIOD ;
- au moins une identité d'au moins une capacité, disponible sur le LIOD ;
- une indication, indiquant que la au moins une capacité du LIOD est disponible temporairement, et
- au moins un paramètre de communication, indiquant la connexion établie entre l'IOD (120, 120') et le LIOD.

6. IOD (120, 120') selon l'une quelconque des revendications 3-5, dans lequel l'IOD (120, 120') est configuré pour transmettre, à l'IODH, au moins une politique, décisive pour l'utilisation de la au moins une capacité du LIOD.

7. IOD (120, 120') selon l'une quelconque des revendications 3-6, dans lequel l'IOD (120, 120') est configuré pour être authentifié avant le transfert du au moins un flux.

8. IOD (120, 120') selon l'une quelconque des revendications 3-7, dans lequel l'IOD (120, 120') est configuré pour traduire le au moins un flux d'un protocole de communication entrant vers un protocole de communication sortant lors du transfert.

9. IOD (120, 120') selon l'une quelconque des revendications 4-8, dans lequel l'IOD (120, 120') est configuré pour initier le transfert en réponse à la réception, à partir du LIOD, d'une acceptation d'utilisation de la au moins une capacité du LIOD.

10. IOD (120, 120') selon l'une quelconque des revendications 3-9, dans lequel l'IOD (120, 120') est configuré pour associer la session à une pluralité de flux, chaque flux étant dédié à et défini pour un parmi le LIOD ou l'IOD (120, 120').

11. IOD (120, 120') selon la revendication 10, dans lequel l'IOD (120, 120') est configuré pour dédier au moins un des flux à une capacité spécifique du LIOD.

12. Gestionnaire de dispositif d'entrée/sortie, IODH, (100, 100') pour fournir à une session, fournie par un serveur, l'accès à au moins une capacité, disponible sur un dispositif d'entrée/sortie hérité, LIOD, l'IODH (100, 100') étant configuré pour :
- recevoir, à partir d'un dispositif d'entrée/sortie, IOD, une annonce, indiquant au moins une capacité, disponible sur un LIOD, connecté à l'IOD ;
- recevoir, à partir de l'IOD, des informations sur un signal de balise, reçu par l'IOD, à partir d'une étiquette utilisateur, UT, dans lequel le signal de balise est associé à une session, demandée par l'UT, et
- transmettre, à l'IOD, des instructions donnant l'ordre à l'IOD d'ajouter au moins une de la au moins une capacité à la session, en réponse à la détermination, sur la base de la au moins une capacité, disponible sur le LIOD, qu'au moins une de la au moins une capacité doit être ajoutée à la session.

13. IODH (100, 100') selon la revendication 12, dans lequel l'IODH (100, 100') interprète l'annonce concernant au moins une capacité, disponible sur le LIOD, comme une extension des capacités disponibles sur l'IOD.

14. IODH (100, 100') selon l'une quelconque des revendications 12 ou 13, dans lequel l'annonce comprend en outre au moins un parmi :
- une identité du LIOD ;
- une identité respective d'au moins une capacité, disponible sur le LIOD ;
- une indication que les capacités du LIOD sont disponibles temporairement via l'IOD, et
- au moins un paramètre de communication, indiquant la connexion établie entre l'IOD et le LIOD.

15. IODH (100, 100') selon l'une quelconque des revendications 12-14, dans lequel l'IODH (100, 100') est en outre configuré pour déterminer et donner l'ordre à l'IOD que l'ajout soit exécuté via au moins un flux, dédié à la au moins une capacité du LIOD.

16. IODH (100, 100') selon l'une quelconque des revendications 12-15, dans lequel l'IODH (100, 100') est en outre configuré pour déterminer et donner l'ordre à l'IOD que la session soit associée à une pluralité de flux.

17. IODH (100, 100') selon la revendication 16, dans lequel l'IODH (100, 100') est configuré pour dédier au moins un flux à une capacité spécifique du LIOD.
